Europäisches Patentamt

European Patent Office

Office européen des brevets

(11) Numéro de publication: **0 159 941 B1**

# FASCICULE DE BREVET EUROPEEN

(45) Date de publication de fascicule du brevet:
08.05.91

(51) Int. Cl.⁵: **G06F 13/42**

(21) Numéro de dépôt: **85400708.5**

(22) Date de dépôt: **09.04.85**

(54) **Bus série d'interconnexion pour système de traitement d'informations et procédé d'échanges d'informations.**

(30) Priorité: **10.04.84 US 598644**

(43) Date de publication de la demande:
**30.10.85 Bulletin 85/44**

(45) Mention de la délivrance du brevet:
**08.05.91 Bulletin 91/19**

(84) Etats contractants désignés:
**BE DE FR GB IT NL SE**

(56) Documents cités:
**WO-A-84/00219**
**FR-A- 2 360 131**
**FR-A- 2 407 523**
**US-A- 4 395 756**

(73) Titulaire: **LA TELEMECANIQUE ELECTRIQUE**
**33 bis, avenue du Maréchal Joffre**
**F-92000 Nanterre(FR)**

(72) Inventeur: **Quatse, Jesse T.**
**21 Tamal Vista Boulevard Suite 200**
**Corte Madera California 94925(US)**

(74) Mandataire: **Bouju, André et al**
**Cabinet Bouju, 38, Avenue de la Grande Armée**
**F-75017 Paris(FR)**

## Description

La présente invention concerne l'échange d'informations au moyen d'une ligne série bidirectionnelle. Elle concerne plus particulièrement un protocole d'échange d'informations série associé à un bus de liaison entre une unité centrale de traitement et plusieurs modules périphériques.

Les architectures informatiques de la technique antérieure comportent une unité centrale de traitement, une mémoire et divers dispositifs d'entrée et de sortie dans une enceinte de calculateur. L'information est échangée par l'intermédiaire d'un bus parallèle consistant en plusieurs lignes dont chacune transfère un bit d'information. Prises collectivement, les lignes transfèrent plusieurs bits en parallèle au même instant, ceci constituant un mot.

Il est souvent souhaitable d'étendre le domaine de l'unité centrale de traitement (CPU) à l'intérieur de l'enceinte de l'ordinateur. Il n'est cependant pas pratique d'effectuer l'extension d'un bus parallèle pour les raisons suivantes :

1) le coût du câble de liaison est très important ; certaines applications requièrent un câble à 68 conducteurs. La longueur du câble nécessaire pour effectuer l'extension de la CPU d'un bac d'équipement à l'autre dans l'enceinte renchérit sensiblement le coût de l'ordinateur.

2) le coût de connecteurs appropriés à un câble à 68 conducteurs est un facteur important. Le câblage de tels connecteurs est difficile et demande un travail intensif.

3) chaque conducteur du câble doit comprendre un organe de commande (driver) d'émission et de réception à chaque extrémité et une circuiterie correspondante pour effectuer la transmission bidirectionnelle de l'information. Il est nécessaire d'utiliser de grandes surfaces de cartes et d'énergie de commande pour développer de cette façon les signaux transmis par le bus parallèle.

4) les bus parallèles ne sont pas aisés à blinder et sont sujets à une dégradation du signal induite par la transmission, par suite du bruit et des interférences d'environnement et de ligne.

Il est bien connu de réaliser des communications duplex série entre un ordinateur et un dispositif périphérique, par exemple pour communiquer entre une imprimante et un ordinateur selon le protocole IEEE RS-232. Ces communications série connues ne conviennent pas à l'extension d'une CPU car chaque ligne série doit être affectée à un seul dispositif périphérique. Seules les communications point à point sont donc réalisables avec l'usage de tels protocoles de communication série. Pour étendre le domaine d'une CPU par ces techniques connues, il faudrait utiliser un bus série séparé pour chaque périphérique adressé. Lorsqu'on ajoute plusieurs périphériques, par exemple neuf modules, le nombre de fils du câble d'interconnexion devient un facteur important d'accroissement du coût, de même que le matériel de commande des lignes.

Un autre facteur important qui entre en jeu dans l'extension du domaine d'une CPU par communication parallèle ou série réside dans l'environnement dans lequel fonctionne l'ordinateur. Par exemple des ordinateurs commandant des lignes d'assemblage, appelés ci-après automates programmables, sont des éléments de matériel hautement spécialisés pilotant des processus industriels par exemple dans des fonderies et des usines. Dans une fonderie ou une usine, le milieu est bruyant, néfaste aux composants de l'automate, ceux-ci étant assujettis à des pointes de température et d'humidité, et dégradant pour la communication électronique. La fiabilité est cruciale pour commander un processus industriel, puisqu'une erreur d'interprétation d'information risque de produire des actionnements inappropriés de l'équipement et de conduire à des résultats désastreux.

Une autre considération, particulièrement importante dans le cas des automates programmables, est leur souplesse d'adaptation. Le domaine de la CPU est souvent étendu pour commander des processus perfectionnés ou plus complexes afin de s'adapter aux conditions de fabrication à une date ultérieure. Il est souhaitable de reconfigurer la CPU et d'ajouter les dispositifs périphériques nécessaires. Les extensions parallèles obèrent le coût, les extensions série ne sont pas transparentes, mais imposent en revanche un protocole duplex avec la CPU. Les deux approches ne sont pas satisfaisantes en termes de coût, de fiabilité, d'immunité au bruit et de souplesse d'emploi.

On connaît, d'après US-A-4.395.756, un bus série transparent d'interconnexion permettant d'étendre le domaine parallèle d'une unité centrale de traitement (CPU) à un domaine de module périphérique parallèle; le bus étant associé à un protocole série bidirectionnel qui transfère l'information entre la CPU et un ou plusieurs contrôleurs de modules périphériques appelés têtes de bac. Chaque tête de bac détermine à son tour un acheminement parallèle vers un nombre quelconque de modules périphériques associés audit bac.

Le bus série d'interconnexion comprend une ligne de trame qui définit un intervalle d'échange d'information synchrone. La ligne de trame propage un signal de trame depuis la CPU pour définir un point début et un point fin de l'intervalle d'échange et elle porte une structure d'interruption en l'absence de signal de trame. Par conséquent les communications issues d'une tête de bac en l'absence de signal de trame indiquent qu'une anomalie affecte la tête de bac ou le module périphérique.

Une ligne d'horloge propage un signal CLK d'information synchrone à partir de la CPU pendant l'intervalle d'échange d'information. La tête de bac et les modules périphériques reçoivent une référence système sous la forme du signal d'horloge. De cette manière, le fonctionnement de la tête de bac et de ses modules périphériques associés est synchronisé avec celui de la CPU.

Une ligne SYNC propage un signal SYNC depuis la CPU et identifie celui ou ceux des messages asynchrones discrets qui risquent de survenir pendant l'intervalle d'échange d'information. Le signal SYNC indique qu'un message va commencer ou vient de se terminer. Il est donc prévu un niveau de redondance pour la vérification, l'immunité au bruit et la fiabilité. Un signal d'acquittement ACK est prévu en réponse au signal SYNC pour indiquer que le signal SYNC a été correctement reçu et qu'un autre message peut être envoyé.

Une ligne de signal propage les messages de données, d'adresses et de commande entre la CPU et les têtes de bac associées pour assurer les échanges souhaités d'information série bidirectionnelle entre elles. L'information ainsi échangée est transférée avec une cadence déterminée par le signal CLK d'information synchrone.

La fiabilité des communications effectuées par ces bus de la technique antérieure en constitue un point faible, particulièrement gênant pour les utilisations dans des processus industriels.

L'invention a pour but de remédier à ces inconvénients en proposant un bus série du type ci-dessus présentant une fiabilité accrue. Ainsi, l'invention propose un bus série d'interconnexion pour système de traitement d'informations comprenant une unité centrale de traitement et au moins un module périphérique, le bus comprenant:

- des moyens de trame pour définir un intervalle d'échange d'informations synchrones;
- des moyens d'horloge mis en oeuvre pendant ledit intervalle d'échange pour définir une cadence d'informations synchrones et pour doter le module périphérique d'une référence système;
- des moyens pour définir au moins un message asynchrone discret pendant ledit intervalle d'échange ; et
- des moyens de ligne pour produire un échange bidirectionnel d'informations série entre l'unité centrale de traitement et le module périphérique à la vitesse déterminée par l'horloge, une tête de bac étant couplée audit bus série à distance de l'unité centrale de traitement pour interfacer le module périphériquez avec le bus en vue de l'échange d'informations entre le module et l'unité centrale de traitement.

Suivant l'invention, ce bus série est caractérisé en ce que la tête de bac comprend des moyens d'interruption couplés aux moyens de ligne pendant un intervalle de temps extérieur à l'intervalle d'échange d'informations, pour informer l'unité centrale de traitement d'anomalies affectant un modèle périphérique et la tête de bac.

Un intervalle d'échange d'information est défini avec des messages discrets dans lesquels peut avoir lieu l'échange d'information à la cadence vitesse définie par l'horloge. Les échanges entre la CPU et les têtes de bac associées sur la ligne de signal comprennent l'information d'adressage pour acheminer les messages vers une tête de bac destinataire ou vers un module périphérique destinataire associé. L'information reçue par la tête de bac en mode série via la ligne série est chargée dans un registre à décalage, puis décalée en parallèle le long d'un bus parallèle local vers le module périphérique adressé. De la même manière, le module périphérique charge un signal parallèle provenant du bus parallèle local dans un registre à décalage contenu dans la tête de bac. Cette information est ensuite extraite en mode série via la ligne série vers la CPU

La présente invention procure un interface de communication multipoints souple, fiable et transparent entre une unité centrale de traitement et un nombre quelconque de modules périphériques. L'information est échangée selon un mode multipoints présentant des aspects prononcés de parallélisme tout en ne requérant que la disposition matérielle simple d'un bus série. Les moyens d'interruption couplés aux moyens de ligne assurent le maximum de sécurité de communication.

La description qui suit d'un exemple de réalisation non limitatif en regard des dessins annexés permettra de mieux expliciter l'invention.

La figure 1 est un schéma synoptique d'une unité centrale de traitement (CPU) couplée par un bus série à un groupe de têtes de bac et à des modules périphériques associés.

La figure 2 est un schéma synoptique d'une unité centrale de traitement conforme à l'invention montrant des signaux afférents au protocole de bus série.

La figure 3 est un chronogramme montrant l'échange d'informations entre une CPU et une tête de bac.

La figure 4 est un chronogramme montrant l'échange d'informations entre la tête de bac et la CPU.

La figure 5 est un organigramme montrant le protocole de bus série au niveau de la CPU.

La figure 6 est un schéma synoptique d'une partie de CPU associée à la génération et la commande de signaux concernant le protocole de bus série.

La figure 7 est un schéma synoptique d'une tête de bac.

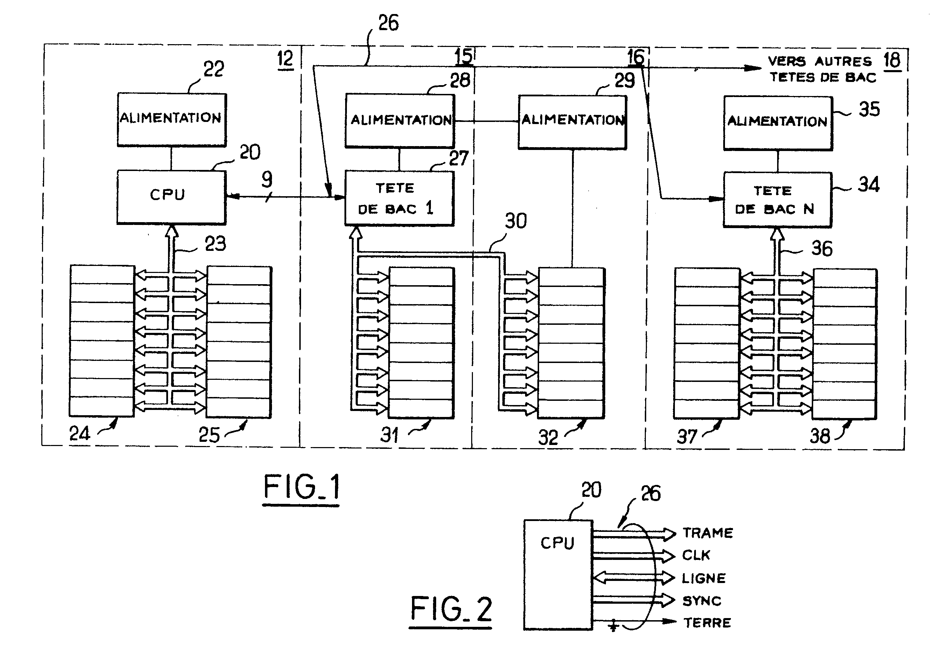

Le bus série d'interconnexion transparent qui va être décrit permet d'étendre une unité centrale de traitement (CPU) à un ou plusieurs bacs de modules périphériques parallèles. Le transfert bidirectionnel d'information s'effectue selon un protocole série. Il est représenté sur la figure 1 un schéma-blocs d'une CPU couplée par un bus série à un certain nombre de têtes de bac et de modules périphériques associés. Une CPU 20 fonctionnant au moyen d'une alimentation 22 commande un certain nombre de dispositifs périphériques locaux 24 et 25 via un bus parallèle 23. La CPU 20 et les périphériques associés sont logés dans un bac 12.

Lorsque le système a besoin de s'étendre, pour des applications spéciales à distance, par exemple en robotique, ou d'accroître sa puissance pour commander des processus plus complexes, il est souhaitable d'étendre le domaine de la CPU 20 plutôt que d'acheter un système plus important. L'invention évite les problèmes inhérents à l'extension d'un bus parallèle vers des emplacements quelque peu distants, par exemple des bacs additionnels situés dans une enceinte commune d'équipements. Il est prévu un bus série 26 permettant de faire entrer dans le domaine de la CPU 20 plusieurs bacs d'équipements 15, 16 et 18. Le bus série 26 est interfacé avec des modules périphériques de bac au moyen de têtes de bac 27, 34. La tête de bac 27 comprend des alimentations associées 28, 29, est agencé avec des bacs 15, 16 et commande des baies, 31, 32 de modules périphériques via un bus parallèle 30. Une tête de bac 34 est associée à une alimentation 35 et commande des baies 37, 38 de modules périphériques via un bus parallèle 36.

L'invention permet donc de convertir le domaine parallèle de la CPU 20 en une ligne de communication série bidirectionnelle qui peut être étendue à un nombre quelconque de têtes de bac. Les têtes de bac interfacent la ligne série avec un bus parallèle permettant de faire fonctionner directement à partir de la CPU un certain nombre de modules périphériques associés. On réalise ainsi un protocole de communication transparent parallèle-série et série-parallèle. Le système peut de cette manière être étendu si nécessaire, en évitant le coût et le manque de fiabilité d'un protocole parallèle entre les points d'interconnexion et en évitant de recourir à l'adjonction d'une intelligence complémentaire au système sous forme de processeurs à distance couplés en réseau.

Un schéma-blocs d'une CPU conforme à l'invention est représenté figure 2 et montre les signaux afférents au protocole de bus série. La CPU 20 comprend le bus parallèle 26 et produit les signaux définis ci-après :

(1) Trame : définit un intervalle d'échange d'informations synchrone

(2) Horloge (CLK) : opère pendant l'intervalle d'échange d'information pour définir une vitesse d'information synchrone. De plus l'horloge procure une référence système aux têtes de bac et aux modules périphériques associés.

(3) SYNC : définit au moins un message discret asynchrone pendant l'intervalle d'échange,

(4) Ligne : produit un échange d'informations bidirectionnel série entre la CPU et les modules périphériques à la vitesse déterminée par l'horloge.

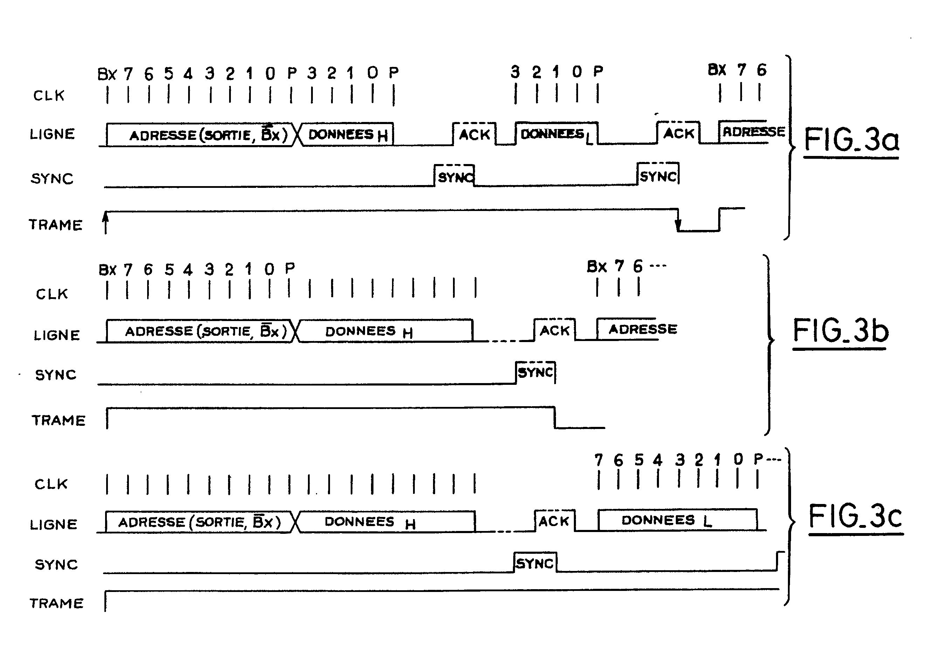

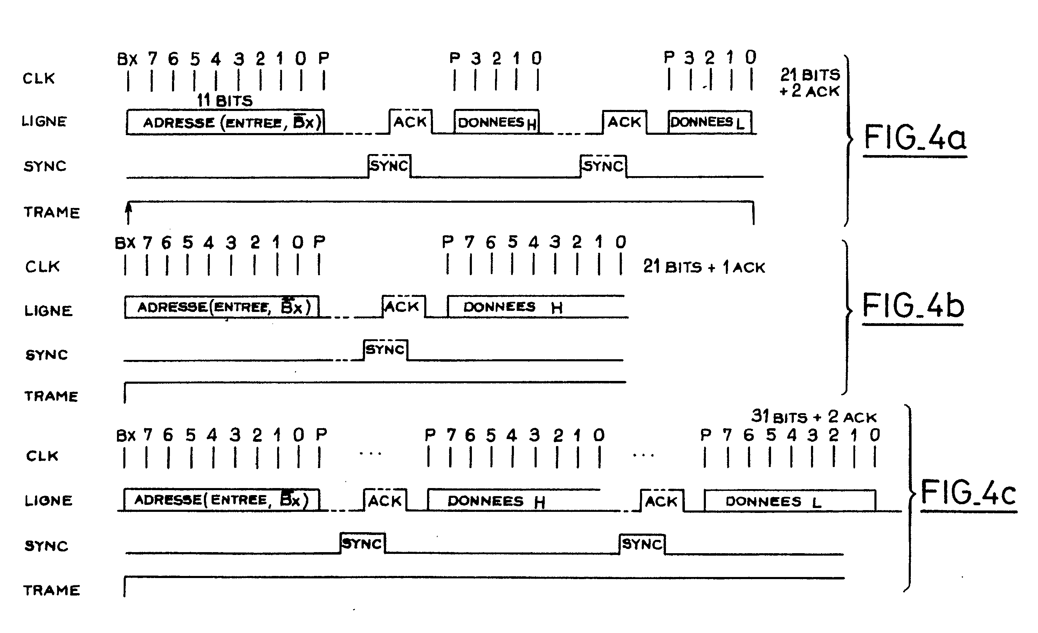

Les chronogrammes montrant l'échange d'informations entre la CPU et une tête de bac et vice-versa selon les protocoles de transfert série d'entrée-sortie (I/O) sont représentés sur les figures 3 et 4.

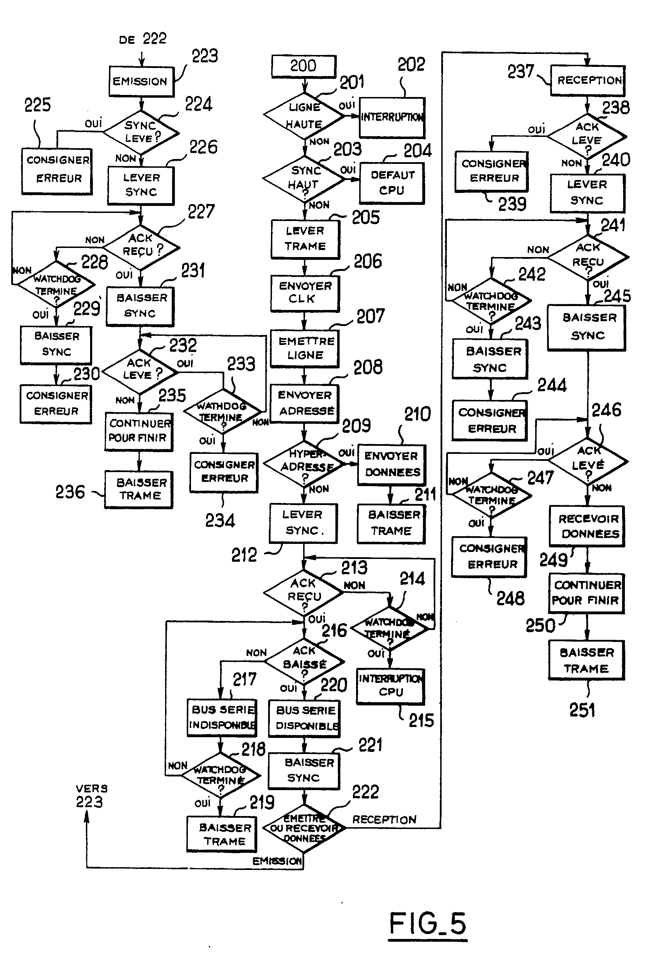

La présente description comprend une discussion de l'ordre des bits dans chaque type de transfert, adressage normal et hyper-adressage (adressage du matériel tête de bac) et des procédures d'adressage pour interrogation, des transferts de données 4 bits, 8 bits, 16 bits et du fonctionnement de l'horloge. Un organigramme montrant le protocole série au niveau de la CPU est illustré par la figure 5 et sera décrit en détail ci-dessous.

Le bus série est transparent à l'information en transit (sauf si l'information est particulièrement destinée à une tête de bac, par exemple une hyper-adresse). Sauf dans des cas exceptionnels, le transfert d'adresses et d'informations s'effectue toujours pendant un intervalle défini par le signal de trame. Ces transferts comprennent tous un bit de parité qui reflète les bits de données ou d'adresses qui ont été transférés via le bus série. Le contrôle de parité n'est réalisé que sur les bits transitant par le bus. On n'a donc pas connaissance des parties de mot de poids fort ou poids faible (H/L) (pour certains transferts d'information à 8 bits et pour tous les transferts d'information à 16 bits) et de l'effet sur la parité du point de vue du module périphérique adressé en dernier. La tête de bac décrypte la parité sur une donnée lue avant de renvoyer le bit de parité vers la CPU via le bus.

Le protocole de transfert des bits sur le bus série peut être considéré comme comprenant un protocole d'adressage et un protocole de données.

Le protocole d'adressage est le suivant :
N/B MS0 MS1 MS2 RS0 RS1 RS2 R/W C/D PAR STRAV dans lequel N/B est vrai quand un transfert numérique à 8 bits (données venant de ou allant vers des modules E/S analogiques) va s'effectuer ou quand un transfert de bloc (grande quantité de données) va s'effectuer, par exemple un transfert de données vers un émetteur-récepteur asynchrone universel (UART) ou un autre tel coupleur. N/B est faux pour un transfert binaire de 4 bits.

MS0-2 sont les bits de sélection de module qui permettent la sélection de l'un des 8 modules périphériques dans le bac associé à la tête de bac réceptrice. Un module périphérique particulier répond par conséquent à sa seule adresse. D'autres modes de réalisation de l'invention peuvent comprendre des bits supplémentaires de sélection de module pour accéder à davantage de modules périphériques.

RS0-2 sont les bits de sélection de bac qui permettent de choisir l'un parmi 8 bacs dans un environnement local. Une tête de bac particulière répond donc à sa seule adresse. D'autres modes de réalisation de l'invention peuvent comprendre des bits supplémentaires de sélection de bac pour accéder à davantage de bacs.

R/W est le bit de lecture/écriture qui détermine quand il est vrai si un module périphérique doit recevoir des données (écriture) ou en émettre (lecture).

C/D est le bit de commande/données qui détermine quand il est vrai si une information de commande ou de données va succéder à l'adresse.

PAR indique la parité. Ainsi lorsque tous les bits sont à zéro la parité est un pour tous les bits, y compris N/B, MS, RS, R/W et C/D.

STRAV est la séquence de synchronisation "bac disponible" qui opère comme suit : le signal SYNC est utilisé à la fin d'une séquence d'adressage par la CPU. La tête de bac répond qu'elle a reconnu l'adresse par l'émission d'un signal d'acquittement ACK (normalement dans une durée de bit, comme décrite ci-dessous). Si la tête de bac prend plus longtemps, le transfert est ralenti. Le temps de réponse avant envoi du signal ACK est mis en surveillance par le chien de garde de la CPU. Si le signal ACK n'apparaît pas dans le temps de garde, une interruption affecte la CPU. Si le signal ACK est reçu, la ligne SYNC est mise à son niveau bas. Si la tête de bac a le contrôle du bus de bac, elle baisse son signal ACK. Si la tête de bac n'a pas le contrôle du bus de bac, elle garde le signal ACK jusqu'à la libération du bus de bac.

La commande du bus de bac par la tête de bac dépend du fonctionnement du module périphérique associé au bac. Si le bus série est indisponible, la CPU attend. La CPU met en chien de garde la disponibilité du bus. Si la CPU est bloquée, le signal de trame est rendu faux et un signal "défaillance de CPU" devient vrai. Dès que le signal de trame devient faux, la tête de bac libère la ligne et une interruption est envoyée à la CPU.

Deux signaux, qui ne transitent pas par le bus série comme bits d'adresse, mais qui servent de bits d'adresse H/L et ADR sont générés, par le matériel tête de bac comme suit :

H/L est le bit poids fort/poids faible de mot ou d'élément de mot indiquant la partie d'un mot forte ou faible qui va être émise. H/L est par définition mis à zéro quand l'adresse arrive à la tête de bac matérielle. H/L est mis à un après le premier transfert de données. H/L est donc inversé à chaque nouveau transfert jusqu'à ce que le signal de trame devienne faux.

ADR est le bit poids fort/poids faible de mot quand N/B n'est pas vrai et que l'on a plus de deux échanges de données (de 4 bits chacun). ADR est utilisé dans l'adressage des transferts à 16 bits. Dans le présent mode de réalisation de l'invention, il n'y a jamais plus de quatre transferts de 4 bits sans changement du signal de trame. La tête de bac a par conséquent un compteur à 2 bits, le bit de poids faible étant H/L et celui de poids fort étant ADR. Cependant ADR n'est pas autorisé à prendre la valeur un sauf si N/B est faux. De plus le compteur est remis à zéro quand le signal de trame devient faux.

Le protocole d'hyper-adressage (adresse de la tête de bac et non d'un module périphérique associé) est le suivant :
RS0 RS1 RS2 RS3 R/W C/D PAR STRAV dans lequel :
RS0-3 sont les bits de sélection de bac permettant de choisir l'un parmi huit bacs dans l'environnement local,
R/W est le bit de lecture/écriture,
C/D est le bit de commande/données,

PAR est la parité ; si tous les bits sont à zéro, la parité est de un pour tous les bits, tels que RS, R/W et C/D.

STRAV est la séquence de synchronisation "tête de bac disponible". Cette séquence fonctionne comme décrit précédemment, sauf que la tête de bac ne vérifie pas la commande du bus de bac du fait que l'échange a lieu uniquement entre la CPU et la tête de bac. Dès que la CPU abaisse "SYNC", la tête de bac abaisse ACK.

Un transfert d'information sur 8 bits vers la tête de bac va à présent être décrit :
B0 + x   B1 + x   B2 + x   B3 + x   B4 + x   B5 + x   B6 + x B7 + x PAR SYNC
x vaut zéro si H/L est faux ou huit si H/L est vrai.
B0-B15 sont les bits de donnée ; B0 est le bit le moins significatif. L'ordre de transfert est : bits 0-7, bits 8-15, bits 0-7, etc... (s'il y a plus de deux mots). Seul le premier mot est nécessaire.

PAR est la parité (si tous les bits sont à zéro, la parité est de un) pour tous les bits, B0 + x à B7 + x. La parité qui est reçue du bus parallèle comprend H/L et ADR. Ces signaux sont extraits par la tête de bac qui vérifie alors que la parité est la même que celle reçue du bus série.

SYNC est le signal envoyé par la CPU pour indiquer qu'un échange d'information est achevé, pour vérifier la parité correcte en provenance d'un module périphérique, ou pour envoyer un ACK si le module périphérique émet ACK. La CPU attend pendant une durée prédéterminée. Si ACK n'est pas reçu pendant cette durée, la CPU libère SYNC et consigne une erreur. Si la CPU reçoit par contre ACK, elle ôte SYNC et attend ACK pour continuer. Cette étape est mise en chien de garde (watchdog). De plus la CPU examine ACK tout en faisant SYNC afin d'être certaine que ACK n'est pas vrai. Une erreur est indiquée si ACK est vrai au début de SYNC.

Un transfert d'information à 4 bits vers la tête de bac s'effectue comme suit :
B0 + x B1 + x B2 + x B3 + x PAR SYNC dans lequel :

x vaut zéro si H/L est faux ou quatre si H/L est vrai et ADR est faux.
B0-B15 sont les bits de données : B0 est le bit le moins significatif ; l'ordre de transfert est bits B0-3, bits B4-7, bits B8-11, bits B12-15. Seul le premier quartet est nécessaire.

PAR est la parité (si tous les bits valent zéro, la parité vaut un) pour tous les bits B0 + x à B3 + x. Il convient de noter que le PAR reçu du bus parallèle inclut H/L et ADR. La tête de bac extrait ces signaux et vérifie que ce signal PAR est le même que celui reçu du bus série.

SYNC est le signal envoyé par la CPU pour indiquer que l'échange de données est achevé, pour vérifier la parité correcte venant du module périphérique et pour envoyer un ACK si le module périphérique envoie ACK. La CPU attend pendant une durée prédéterminée. Si ACK n'est pas reçu pendant cette durée, SYNC est libéré et une erreur est consignée. Si ACK est reçu, SYNC est ôté et la CPU attend ACK pour continuer. Ceci est mis en chien de garde (watchdog). En outre la CPU examine ACK pour être certaine que ACK n'est pas vrai. Une erreur est indiquée si ACK est vrai au début de SYNC.

Un transfert numérique à huit bits à partir de la tête de bac est le suivant :
SYNC PAR B7 + x B6 + x B5 + x B4 + x B3 + x B2 + x B1 + x B0 + x
x vaut zéro si H/L est faux, ou huit si H/L est vrai
B0-B15 sont les bits de données : B0 est le bit le moins significatif. L'ordre de transfert est bits 0-7, bits 8-15, bits 0-7, etc (s'il y a plus de deux mots). Seul le premier mot est nécessaire.

PAR est la parité (c'est-à-dire que si tous les bits sont à zéro, la parité est de un) pour tous les bits, tels que B0 + x à B7 + x. La parité reçue du bus parallèle inclut H/L et ADR. La tête de bac extrait ces signaux et envoie PAR sur le bus série. La CPU utilise PAR pour déterminer si la parité de données est correcte.

SYNC est le signal envoyé par la CPU pour indiquer que l'échange d'information va commencer. La tête de bac doit lire l'information et la parité en provenance du module périphérique associé et doit envoyer un ACK si le module émet ACK. La CPU attend pendant une durée fixée. Si un ACK n'est pas reçu pendant cette durée, la CPU libère SYNC et consigne une erreur. Ceci est mis en chien de garde (watchdog). De plus, la CPU examine ACK tout en faisant SYNC de manière à être sûre que ACK n'est pas vrai. Une erreur est indiquée si ACK est vrai au début de SYNC.

Un transfert d'information à 4 bits à partir de la tête de bac s'effectue comme suit :
SYNC PAR B3 + x B2 + x B1 + x B0 + x
x vaut zéro si H/L est faux et vaut quatre si H/L est vrai et si ADR est faux. Si ADR est vrai, x vaut huit ou douze respectivement.

B0-15 sont les bits de données ; B0 est le bit le moins significatif. L'ordre de transfert des bits est bits B0-3, bits B4-7, bits 8-11 et bits B12-15. Seul le premier quartet est nécessaire.

PAR est la parité (c'est-à-dire que si tous les bits sont à zéro, la parité vaut un) pour tous les bits B0 + x à B3 + x. Le PAR qui est reçu du bus parallèle inclut H/L et ADR. La tête de bac les extrait et envoie le signal résultant sur le bus série. La CPU exploite ce signal pour déterminer si la parité de données est correcte.

SYNC est le signal envoyé par la CPU pour indiquer que l'échange d'information va commencer. La tête de bac lit les données et la parité provenant du module périphérique adressé et émet un ACK si le module périphérique émet ACK. La CPU attend pendant une durée fixée. Si un ACK n'est pas reçu pendant cette durée, la CPU libère SYNC et consigne une erreur. Si la CPU ne reçoit pas ACK, elle extrait SYNC puis attend ACK pour continuer. Ceci est mis en chien de garde (watchdog). De plus, la CPU examine ACK tout en faisant SYNC afin d'être sûre que ACK n'est pas vrai. Une erreur est indiquée si ACK est vrai au début de SYNC.

Il existe deux types de transferts d'informations : numérique (NUM) et binaire (BIN). Une séquence de transfert de sortie NUM est la suivante :
1) Trame départ
2) Adresse N/B = 1, C/D = D, R/W = W
3) Octet de commande = 1 (bit 7 = BX)
4) Octet de commande = 2 (normalement adresse de registre)
5) Adresse, N/B = 1, C/D = D, R/W = R
6) sortie NUM 8 bits : bits 0-7
7) sortie NUM 8 bits : bits 8-15
8) N sorties NUM 8 bits (si sortie de plus de 2 octets)
9) Trame fin
Les figures 3A-3C montrent ces sorties de la manière suivante : 8 bits, 4 bits à la fois (figure 3A)

; 8 bits, 8 bits à la fois (figure 3B) ; 16 bits, 8 bits à la fois (figure 3C).

Une séquence de transfert d'information d'entrée NUM est la suivante :

1) Trame départ
2) Adresse, N/B = 1, C/D = D, R/W = W
3) Octet de commande = 1 (bit 7 = BX)
4) Octet de commande = 2 (normalement registre d'adresse )
5) Adresse, N/B = 1, C/D = D, R/W = R
6) entrée NUM 8 bits : bits 0-7
7) sortie NUM 8 bits : bits 8-15
8) N entrées NUM 8 bits (éventuellement plus d'un octet)
9) Trame fin

Les figures 4A-4C montrent ces séquences d'entrée de la manière suivante : 8 bits, 4 bits à la fois (figure 4A) ; 8 bits, 8 bits à la fois (figure 4B) ; et 16 bits, 8 bits à la fois (figure 4C).

Certaines des diverses séquences d'entrée et sortie réalisables selon l'invention sont les suivantes :

A) 8 bits en sortie (figure 3A)
1) Trame départ
2) Adresse, N/B = 0
3) Sortie 4 bits, bits 0-3
4) Sortie 4 bits, bits 4-7
5) Trame fin

B) 8 bits en entrée
1) Trame départ
2) Adresse, N/B = 0
3) Entrée 4 bits, bits 0-3
4) Sortie 4 bits, bits 4-7
5) Trame fin

C) 16 bits en sortie
1) Trame départ
2) Adresse, N/B = 0
3) Sortie 4 bits, bits 0-3
4) Sortie 4 bits, bits 4-7
5) Sortie 4 bits, bits 8-11
6) Sortie 4 bits, bits 12-15
7) Trame fin

D) 16 bits en entrée
1) Trame départ
2) Adresse, N/B = 0
3) Entrée 4 bits, bits 0-3
4) Sortie 4 bits, bits 4-7
5) Entrée 4 bits, bits 8-11
6) Sortie 4 bits, bits 12-15
7) Trame fin

E) Sortie 4 bits
1) Trame départ
2) Adresse, N/B = 0
3) Sortie 4 bits, bits 0-3
4) Trame fin

F) Entrée 4 bits
1) Trame départ
2) Adresse, N/B = 0

3) Entrée 4 bits, bits 0-3
4) Trame fin

G) Sortie de commande hyper-adresse
1) Trame départ
2) hyper-adresse (adresse de bac)
3) sortie 4 bits, bits 0-3
4) Trame fin

H) Entrée d'état hyper-adresse
1) Trame départ
2) Hyper-adresse (adresse de bac)
3) Entrée 4 bits, bits 0-3
4) Trame fin

D'autres séquences de transfert d'information sur le bus comprennent CPUF (défaut de CPU) qui produit des signaux indiquant aux têtes de bac une défaillance de la CPU. Ceci se manifeste sur le bus série par l'état haut de SYNC lorsque TRAME est à l'état bas. Une telle situation peut survenir soit à l'établissement ou à la disparition de tension sur la CPU, soit lors d'une défaillance de la CPU, soit lorsqu'une tête de bac se connecte au bus série. Ainsi quand l'établissement de tension a lieu, il se produit un intervalle correspondant à l'émission de CPUF sur le bus série. La même situation se produit à la disparition de tension. Quand une défaillance réelle de CPU survient, ceci est indiqué sur le bus série jusqu'à la disparition de la tension. Quand une tête de bac se connecte au bus série (par exemple pendant STRAV), CPUF ne dure que quelques microsecondes.

Une interruption de bus série (SIT) est émise par la tête de bac tant que TRAME est faux et qu'il y a un signal d'interruption sur la tête de bac. L'interruption se produit quand la tête de bac rend la ligne vraie. Quand la CPU voit que TRAME est bas et que la ligne est haute, il y a détection d'une interruption.

La tête de bac opère comme suit en ce qui concerne la parité :

1) Sortie de la CPU :

La tête de bac vérifie la parité de tous les groupes de bits lorsqu'arrive SYNC. En cas de sortie de données, la tête de bac envoie les données (4 bits ou 8 bits) au module périphérique approprié, puis vérifie la parité retournée par le module, prenant en compte H/L et ADR. La tête de bac envoie alors le ACK du module périphérique à la CPU si le contrôle de parité est valide. La tête de bac mémorise la parité incorrecte et la met en registre d'état dès lors qu'elle a reçu une parité correcte a) de la CPU, ou b) du module périphérique. De plus s'il existe une parité incorrecte sur une adresse, la tête de bac est empêchée de répondre à SYNC. Lorsque la tête de bac reçoit une parité incorrecte sur les données provenant de la CPU, il n'y a pas de ACK puisque la tête de bac n'émet pas les données vers le module périphérique désigné. La tête de bac ne peut donc pas recevoir un ACK du module périphérique à retransmettre à la CPU.

2) Entrée vers la CPU :

La tête de bac n'a pas à vérifier la parité de l'entrée de données à la CPU pour intercepter (HALT) ACK, mais en revanche envoie le bit de parité tel que reçu du module périphérique désigné (après retrait de H/L et ADR). La CPU contrôle si la parité est correcte ou incorrecte.

Une erreur sur H/L ou ADR à un endroit quelconque entre la tête de bac et le module périphérique sélecté renvoie une erreur de parité à la CPU. Cependant la tête de bac vérifie la parité et, dès qu'elle reçoit une parité incorrecte du module périphérique désigné, mémorise le fait dans son registre d'état. La CPU décide si la tête de bac efface l'erreur de son registre lors d'un nouvel échange ou à la lecture de l'état de la tête de bac par la CPU.

Les deux fronts du CLK du bus série sont significatifs, selon ce qui se passe. Pendant la sortie des adresses, des données et de la parité, le front arrière du CLK est utilisé par la tête de bac pour cadencer l'information vers ses registres. La CPU décale les nouvelles données au front arrière du CLK.

Durant l'entrée de données et de parité, le front arrière du CLK est utilisé par la tête de bac pour cadencer ses registres à décalage et pour valider les bits de données et de parité vers la ligne. La CPU exploite ce front (un signal CLK plus tard) pour cadencer l'information vers ses registres. La différence apparente entre l'intervalle d'émission de données et de maintien entre entrée et sortie concerne le cheminement commun de CLK et de données pendant la sortie. Pendant l'entrée le CLK est envoyé par la CPU, la tête de bac émet les données quand elle reçoit le signal CLK ; la CPU cadence les données après cet acheminement sur le bus série.

Par conséquent durant une entrée il y a deux traversées du bus série.

Un organigramme montrant le protocole de bus série au niveau de la CPU est représenté figure 5.

On comprendra que, compte tenu de l'organigramme de la figure 5 et de la discussion en regard, l'homme de l'art peut aisément écrire sans expérimentation excessive un programme informatique approprié pour faire fonctionner la CPU conformément à l'invention.

Au début d'une séquence d'échange de données sur le bus série, toutes les lignes - TRAME, CLK, SYNC, et ligne sont abaissées (200). La ligne est contrôlée quant à son état actif (201) et s'il est au niveau haut, une interruption est transmise à la CPU (202). Si la ligne n'est pas au niveau haut, l'état de SYNC est contrôlé (203). Si SYNC est au niveau haut, un état défaillance de CPU est transmis (204) et les indications appropriées sont faites à l'opérateur système.

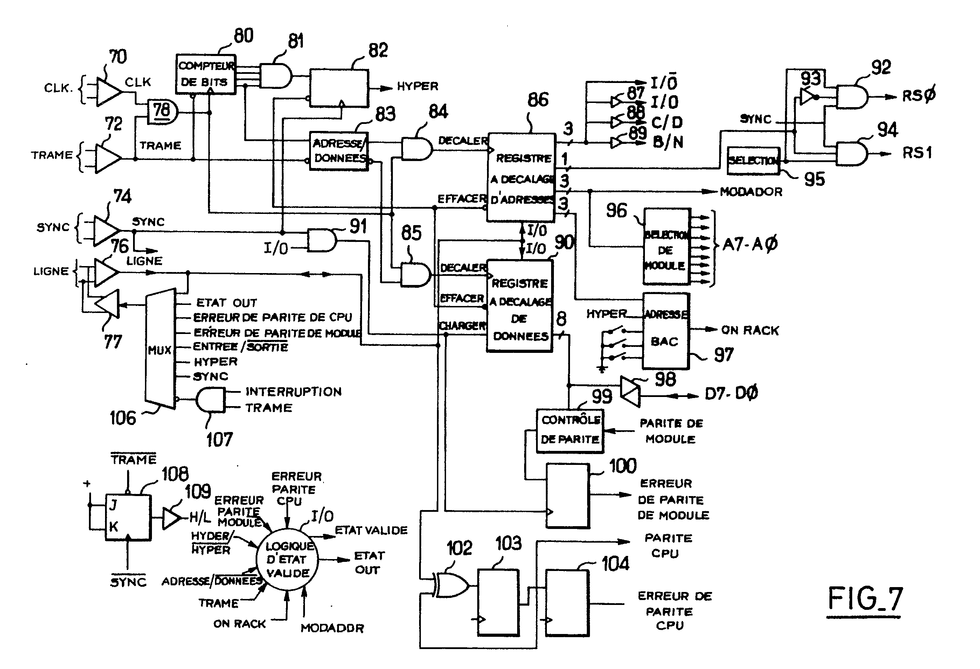

Si ligne et sync sont à la fois au niveau bas, la CPU monte le signal trame (205) et commence à envoyer le signal CLK (206). Dans certaines formes d'exécution de l'invention, CLK est émis et contrôlé en continu sur la tête de bac par le signal trame, voir figure 7, par exemple. Ensuite "ligne" est mis en mode transmission (207) et une adresse est envoyée à la tête de bac sur le bus série (208).

Si l'adresse envoyée est une hyper-adresse, c'est-à-dire celle d'une tête de bac (209), la CPU envoie les données de commande appropriées à la tête de bac (210) puis abaisse le signal de trame (211). Si une adresse normale est émise, c'est-à-dire celle des modules périphériques associés au matériel tête de bac, la CPU élève le signal sync (212).

La CPU attend alors de recevoir un signal d'acquittement ACK (213). La CPU met en surveillance la ligne pour recevoir le ACK provenant de la tête de bac (214). Si le signal ACK n'est pas reçu, une interruption se propage vers la CPU (215). Si le signal ACK est reçu, la CPU attend l'abaissement du signal ACK (216). Si le bus série est indisponible pour la tête de bac ou s'il existe d'autres problèmes à l'extrémité de la tête de bac (217), une temporisation de surveillance (watchdog) de la CPU s'écoule (218). Il en résulte que la CPU abaisse la trame (219) et peut soit s'engager dans un mode diagnostic soit continuer d'attendre et d'essayer de réémettre l'adresse et les données. Si la temporisation ne s'achève pas avant l'abaissement du signal ACK, le bus série est disponible (220) et la CPU abaisse le signal sync (221).

La CPU peut soit émettre l'information vers la (les) tête(s) de bac via le bus série soit recevoir l'information provenant de la (des) tête(s) de bac via le bus série (222). Pendant une première transaction, l'information est ordinairement émise (223). Si ACK est monté à un instant précédant l'émission ou concomitant à l'émission de données (224), une erreur est consignée par la CPU (225). Si ACK n'est pas mis au niveau haut durant l'émission de données, lorsque la transmission est achevée, la CPU élève le signal sync (226). Ensuite la CPU attend le signal ACK (227).

Si le signal ACK n'est pas reçu (228) à l'instant où une temporisation de surveillance (watchdog) se termine, le signal sync est abaissé (229) et une erreur est consignée par la CPU (230). Si la temporisation ne s'achève pas et que le signal ACK est reçu, la CPU abaisse la ligne sync (231). Si le signal ACK est mis au niveau haut après l'abaissement de sync par la CPU (232), une temporisation de surveillance de la CPU est enclenchée (233) pour attendre l'effacement du signal ACK. Quand la temporisation s'est écoulée, une erreur est consignée par la CPU (234). Si le signal ACK s'efface, ou n'est pas mis au niveau haut, l'échange d'informations continue de la même manière (235) jusqu'à achèvement, le signal de trame étant alors abaissé (236).

Si la CPU doit recevoir des données, la ligne est mise en mode réception (237). La CPU vérifie pour voir si le signal ACK est mis au niveau haut (238) et s'il en est ainsi une erreur est prise en compte (239). Si ACK n'est pas monté, la CPU fait monter le signal sync (240) et attend pour recevoir un signal ACK de la tête de bac (241). Si un signal ACK n'est pas reçu en provenance de la tête de bac après la montée de sync, une temporisation (watchdog) de la CPU est enclenchée (242) et en se terminant provoque l'abaissement de sync (243) et la consignation d'une erreur (244) par la CPU.

Si un signal ACK est reçu, la CPU abaisse sync (245). Ensuite la CPU vérifie pour voir si ACK est monté (246) et s'il en est ainsi réenclenche une temporisation (watchdog) (247) qui en s'arrêtant consigne une erreur sur la CPU (248).

Si ACK n'est pas monté ou s'est effacé après que la CPU a abaissé sync, la CPU est en état de commencer une réception de données via la tête de bac à partir des modules périphériques (249). La CPU continue de fonctionner de cette manière jusqu'à l'achèvement de la transaction (250), la CPU abaissant alors la trame (251).

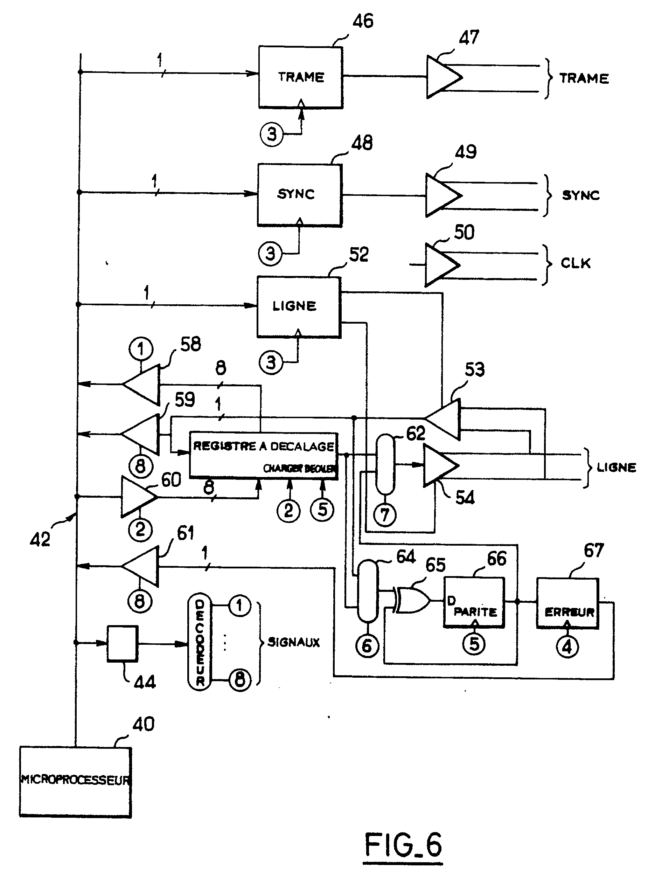

Un schéma synoptique d'une partie de la CPU associée à la génération et à la commande de signaux concernant le protocole de bus série est représenté sur la figure 6.

Un microprocesseur 40 couple l'automate programmable ou la CPU aux diverses parties du bus série via le bus d'adresses et de données 42. La partie interface série de la CPU est commandée par des adresses que génère le microprocesseur et qui sont acheminées le long du bus 42 et accumulées dans un registre d'adresses 44.

Un décodeur d'adresses 45 convertit l'adresse de commande générée par le microprocesseur en une série de signaux 1-8. Ces signaux sont générés en séquence et comme nécessaire pour produire un fonctionnement coordonné de l'interface série à l'extrémité de la CPU. Ainsi les divers constituants indiqués figure 6 incluent des lignes numérotées qui correspondent à des signaux générés au niveau du décodeur d'adresses 45 sous l'ordonnancement du microprocesseur 40.

Le signal trame est généré par le microprocesseur comme décrit figure 5 et couplé via une bascule de trame 46 à un tampon (buffer) de trame 47. Ensuite le signal trame est acheminé par l'intermédiaire du bus série vers la tête de bac.

De la même manière, le signal sync est généré par le microprocesseur comme décrit figure 5 et couplé par une bascule sync 48 à un buffer sync 49. Ensuite le signal sync est acheminé par le bus série vers la tête de bac.

Le signal CLK est envoyé par la CPU ou une horloge système vers la tête de bac via le bus série et par l'intermédiaire d'un buffer 50. Dans le mode de réalisation préféré de l'invention, le signal CLK système est toujours produit et couplé à la tête de bac via le bus série ; les signaux trame et sync sont commandés par des signaux produits au niveau du décodeur d'adresses 45 sous la commande du microprocesseur 40.

Les informations de données et d'adresses à coupler à la tête de bac puis aux divers dispositifs périphériques à distance sont reçues de la ligne ou placées sur la ligne par des buffers 53 et 54 respectivement. Le fonctionnement des buffers - et donc de la configuration d'émission ou de réception de ligne - sont déterminés par l'état d'une bascule ligne 52 qui est à son tour mise en oeuvre par des signaux de commande générés au niveau du décodeur d'adresses 45. Le message à mettre sur la ligne et à amener à la tête de bac est couplée en provenance du bus 42 de données et d'adresses par un buffer 60 qui est commandé par des signaux générés par le décodeur d'adresses 45 et décalés dans un registre à décalage 56. Le registre 56 est commandé par des signaux générés par le décodeur d'adresses de telle sorte que les données décalées dans le registre à décalage en parallèle à partir du buffer 60 puissent être couplées par un multiplexeur 62 et ensuite placées sur la ligne via le buffer 54.

L'information reçue de la tête de bac et des modules périphériques associés à distance est introduite dans le registre à décalage en mode série depuis le buffer 53, puis est extraite en mode parallèle vers le bus de données et d'adresses via le buffer 58, l'ensemble étant sous la commande de signaux générés par le décodeur d'adresses 45.

Le contrôle d'erreur et de parité est produit par les multiplexeurs 62 et 64, la porte OU exclusif 65 et les bascules de parité et d'erreur 66 et 67 respectivement. L'information de parité est couplée au bus de données et d'adresses via le buffer 59 ; l'information d'erreur est couplée audit bus via le buffer 61.

Le microprocesseur est programmé sans difficulté comme décrit figure 5 pour apporter l'information correcte d'adresse au décodeur 45 afin de produire les signaux appropriés qui feront fonctionner les divers dispositifs matériels associés à l'interface microprocesseur/bus série indiqué figure 6. L'interface représenté peut être agencé selon toutes formes d'exécution équivalentes, ceci expliquant que le circuit et le programme logiciel décrit figures 5 et 6 ne forment qu'un exemple de réalisation préféré.

Un schéma synoptique d'une tête de bac est illustré par la figure 7. Le signal trame est couplé à la tête de bac en provenance du bus série via un buffer 72 ; le signal CLK est couplé du bus série à la tête de bac via un buffer 70 ; et le signal SYNC est couplé du bus série à la tête de bac via un buffer 74. Une porte ET 78 sert d'interrupteur pour isoler le signal CLK de la tête de bac en l'absence du signal trame. Cet agencement évite la propagation et une erreur d'horloge induite par le bruit, du fait que le signal CLK, bien que ne commandant pas toujours la tête de bac, est toujours présent sur celle-ci.

La ligne est couplée à partir du bus série vers la tête de bac via les buffers 76 et 77, dont chacun correspond à un sens de communication sur le bus. Le buffer 76 est le buffer de réception, et le buffer 77 est le buffer d'émission. L'information reçue via le buffer 76 depuis la CPU par la ligne est couplée au registre 86 à décalage d'adresses et au registre 90 à décalage de données. Un compteur de bits 80 est actionné par CLK en présence du signal trame pour produire un comptage qui est décodé par une porte ET 81 et une bascule 83. Quand un comptage précis est atteint, la porte ET 81 agit sur la bascule 81 pour indiquer qu'une hyper-adresse a été envoyée de la CPU vers la tête de bac. Une hyper-adresse est comme déjà explicité une adresse concernant uniquement le matériel tête de bac pour déterminer l'état ou entrer un mode commande.

Le compteur de bits 80 compte jusqu'à obtention d'un comptage déterminé indiquant qu'une adresse complète a été reçue. Lorsque ce comptage est atteint, la bascule 83 d'adresses et de données change d'état, en bloquant la porte ET 84 et en ouvrant la porte ET 85, ce qui bloque le registre à décalage 86 et ouvre le registre à décalage 90. Le matériel tête de bac examine donc en premier lieu la ligne via un registre à décalage d'adresses qui accumule une série de bits correspondant à l'adresse envoyée sur le bus série. Dès que l'adresse est accumulée, le compteur agit sur une bascule pour aiguiller le signal reçu sur la ligne vers un registre à décalage de données, lequel accumule les données envoyées sur la ligne.

Avant que les données puissent être transmises vers les modules périphériques ou en provenance de ceux-ci, il faut adresser la tête de bac destinataire, le bac destinataire (dans un système multibacs) et le module destinataire. Il faut en outre déterminer le mode de fonctionnement. Le registre à décalage d'adresses comprend une série de sorties comprenant des lignes de commande d'entrée et de sortie, des lignes de commande ou de données, des lignes de mode mot ou élément de mot, dont toutes ont été décrites précédemment.

Les lignes d'entrée/sortie (I/O), les lignes de commande et de données (C/D) et la ligne de mot ou d'élément de mot (B/N) sont munies d'une sortie tamponnée au moyen de buffers 87-89 respectivement.

Un décodeur 97 d'adresse de bac reçoit une partie de l'adresse décodée par le registre 86 à décalage d'adresse et la compare à une adresse établie par un ensemble commutateur S qui peut être du type à double rangée de broches (DIP). Si l'ensemble commutateur et l'adresse décodée sont identiques, la tête de bac sait qu'elle a été désignée et produit le signal ON RACK. On peut de cette manière choisir un bac particulier.

Dans certains modes de réalisation de l'invention, une tête de bac peut commander plus d'un bac d'équipements. Dans ce but on dispose un circuit de sélection de bac comprenant des portes ET 92 et 94, un inverseur 93 et un commutateur de sélection 95. Il en résulte qu'on peut adresser un bac particulier en même temps que la tête de bac. Bien que seuls deux signaux de sélection de bac RS0 et RS1 aient été représentés, on peut prévoir un plus grand nombre de tels signaux en fonction de l'application envisagée.

La sélection d'un module périphérique s'effectue au moyen d'un décodeur 96 de sélection de module. Il est prévu huit telles lignes de sélection de module pour choisir jusqu'à huit modules associés à la tête de bac. Il est possible de réaliser un décodage additionnel de manière à adresser un nombre beaucoup plus grand de modules à partir d'une seule tête de bac. En présence d'un signal de sélection de module, il apparaît le signal d'adresse de module MOD ADDR indiquant qu'une séquence d'hyper-adressage n'est pas en cours.

Le fonctionnement du registre à décalage de données est fonction de l'émission ou de la réception de données sur la tête de bac. Une porte ET 91 permet de configurer le registre à décalage 90 pour extraire les données de la ligne ou charger les données provenant d'un bus de données parallèle interne. Ce bus couple les modules périphériques au registre à décalage pour décharger sur la ligne les données à les envoyer à la CPU ou pour recevoir les données accumulées en provenance de la ligne CPU via le registre à décalage. Un buffer bidirectionnel 98 sert à décaler les données venant de et allant vers la tête de bac et les modules périphériques.

Le contrôle de parité est réalisé par un circuit 99 de contrôle de parité qui reçoit un signal de parité de module et produit un signal d'erreur de parité de module avec une bascule 100 en cas de détection d'une erreur de parité. Il est prévu de la même manière une porte OU exclusif 102 et des bascules 103 et 104 pour détecter la parité en provenance de la CPU et pour indiquer une erreur de parité de CPU.

Les états des têtes de bac sont tous rassemblés et consignés par un circuit logique 110 de validité. Dans un souci de simplicité, ce circuit n'a été représenté que par un simple symbole. Ce circuit est de préférence constitué par une logique combinatoire. Il n'a ainsi besoin que de recevoir les signaux indiqués et de produire des signaux appropriés d'état valide et hors d'état.

Le signal "hors d'état", en même temps que d'autres signaux d'état, est couplé à un multiplexeur 108 pour produire un rapport d'état et de têtes de bac qui est à son tour couplé par un buffer 77 et par la ligne à la CPU. Une interruption est produite en l'absence de trame détectée par la porte ET 107. Le compteur d'octets fort/faible (H/L) est constitué par la bascule JK 108 et l'inverseur 109. Le circuit compteur d'octets se met en oeuvre à chaque transition du signal SYNC, ce qui correspond à des parties d'octet de poids fort et de poids faible comme déjà décrit.

On obtient par conséquent une forme considérablement perfectionnée de communication série pour interfacer un domaine de CPU parallèle avec un domaine périphérique parallèle situé à distance, tout en éliminant le manque de fiabilité des communications de l'art antérieur et le coût élevé dû à l'extension d'un bus de CPU parallèle. L'invention conserve la souplesse de communication multipoints impossible à réaliser jusqu'à présent avec un système de communication série.

## Revendications

1. Bus série (26) d'interconnexion pour système de traitement d'informations comprenant une unité centrale de traitement (CPU) et au moins un module périphérique, le bus comprenant :
   - des moyens de trame (TRAME) pour définir un intervalle d'échange d'informations synchrones;
   - des moyens d'horloge (CLK) mis en oeuvre pendant ledit intervalle d'échange pour définir une, cadence d'informations synchrones et pour doter le module périphérique d'une référence système;
   - des moyens (SYNC) pour définir au moins un message asynchrone discret pendant ledit intervalle d'échange; et
   - des moyens de ligne (LIGNE) pour produire un échange bidirectionnel d'informations série entre l'unité centrale de traitement (CPU) et le module périphérique à la vitesse déterminée par l'horloge, une tête de bac (27, 34) étant couplée audit bus série (26) à distance de l'unité centrale de traitement (CPU) pour interfacer le module périphérique avec le bus en vue de l'échange d'informations entre le module et l'unité centrale de traitement, ce bus série étant caractérisé en ce que la tête de bac (27, 34) comprend des moyens d'interruption (77, 106, 107) couplés aux moyens de ligne pendant un intervalle de temps extérieur à l'intervalle d'échange d'informations, pour informer l'unité centrale de traitement d'anomalies affectant un module périphérique et la tête de bac.

2. Bus selon la revendication 1, caractérisé par le fait que la tête de bac (27, 34) comprend des moyens d'acquittement couplés aux moyens de ligne pour produire un signal de vérification de la bonne réception d'un champ d'information par la tête de bac.

3. Bus selon la revendication 1, caractérisé par le fait que la tête de bac (27, 34) est agencée et commandée pour interfacer plusieurs modules périphériques (31, 32, 37, 38) avec le bus série (26).

4. Bus selon la revendication 3 , caractérisé par le fait que la tête de bac comprend des moyens d'adressage qui dirigent l'information reçue via le bus série en provenance de l'unité centrale de traitement (CPU) vers un module périphérique sélectionné (24, 25).

5. Bus selon l'une des revendications 1 à 4, caractérisé par le fait qu'il est associé à plusieurs têtes de bac (27, 34) dont chacune est agencée et commandée pour interfacer au moins un module périphérique (31, 27) associé avec le bus série.

6. Bus selon la revendication 5 , caractérisé par le fait que chaque tête de bac (27, 34) comprend des moyens d'adressage de bac (3, 97) susceptibles, en réponse à un signal d'adresse de bac pointant l'une des têtes de bac (27) et reçu sur chacune des têtes de bac (27, 34) en provenance de l'unité centrale de traitement (CPU) et via le bus série (26), de sélectionner la mise en oeuvre de la tête de bac désignée (27).

7. Bus selon l'une des revendications 1 à 6, caractérisé par le fait que la tête de bac comprend des moyens de parité pour détecter (102, 103, 104) et transmettre (106, 77) les erreurs de parité survenant pendant un échange d'informations.

8. Bus selon l'une des revendications 1 à 8, caractérisé par le fait qu'il comprend des moyens pour rapporter un défaut de l'unité centrale de traitement lorsqu'un champ d'information asynchrone est présent sur le bus (SYNC) en l'absence d'un intervalle défini d'échange d'informations synchrones (TRAME).

9. Bus selon l'une des revendications 1 à 8, caractérisé par le fait qu'il comprend des moyens de surveillance (watchdog) pour ordonnancer et synchroniser les échanges bidirectionnels d'informations série entre l'unité centrale de traitement et le module périphérique (31, 32, 37, 38), et pour consigner une erreur système lorsque l'échange d'informations n'est pas formaté dans un champ d'information discret.

10. Bus selon l'une des revendications 1 à 9, caractérisé par le fait que l'échange d'informations comprend un protocole de transfert de bits comportant:
    . un bit de transfert bit/bloc pour identifier les petits et grands transferts d'informations (N/B);
    . un bit de sélection de module pour sélectionner un module périphérique associé au bac (MS);
    . un bit de sélection de bac pour sélectionner un bac destinataire (RS);
    . un bit de lecture/écriture pour établir un mode lecture ou écriture de module périphérique (R/W);
    . un bit de commande/données pour identifier les informations de commande et les données (C/D); et
    . un bit de parité pour indiquer la parité du transfert d'informations (PAR).

11. Bus selon la revendication 10, caractérisé par le fait que le protocole de bits comprend de plus un bit "bac disponible sync" pour indiquer la commande d'un bus de bac (30, 36) par la tête de bac (27, 34).

12. Bus selon la revendication 11, caractérisé par le fait que la tête de bac comprend des moyens (90, 98; 102, 109) pour générer un octet poids fort/ poids faible pour indiquer la partie d'un échange multiple d'informations qui va être reçue.

13. Bus selon la revendication 12 , caractérisé par le fait que la tête de bac comprend des moyens pour générer un signal d'adressage quand il va être procédé à un échange composé d'informations.

14. Procédé d'échange d'informations dans un système de traitement d'informations comportant une unité centrale de traitement (CPU) et au moins un module périphérique (31), le procédé consistant à coupler un domaine parallèle de l'unité centrale de traitement (42) avec un domaine parallèle du module périphérique (30) via un bus série d'interconnexion (26), et comprenant les phases suivantes:
    . définition d'un intervalle d'échange d'informations synchrone avec un signal de trame;
    . définition d'une cadence d'information synchrone pendant l'intervalle d'échange et création d'une référence système pour le module périphérique au moyen d'un signal d'horloge;
    . définition d'au moins un champ d'informations asynchrone discret pendant l'intervalle d'échange au moyen d'un signal SYNC;
    . échange bidirectionnel d'informations série entre l'unité centrale de traitement et le module périphérique à la cadence d'horloge au moyen d'un signal ligne,
    . interfaçage du module périphérique avec le bus série pour l'échange d'informations entre le module périphérique et l'unité centrale de traitement avec une tête de bac couplée au bus série à distance de l'unité centrale de traitement, ce procédé étant caractérisé par une phase d'avertissement de l'unité centrale de traitement quant aux anomalies affectant un module périphérique et/ou la tête de bac au moyen d'un signal d'interruption généré pendant un intervalle extérieur à l'intervalle d'échange.

15. Procédé selon la revendication 14 , caractérisé par une phase de génération d'un signal vérifiant la bonne réception d'un champ d'informations par la tête de bac au moyen d'un signal d'acquittement transmis sur la ligne bidirectionnelle.

16. Procédé selon la revendication 14, caractérisé par une phase d'adressage d'une tête de bac parmi plusieurs.

17. Procédé selon la revendication 14, caractérisé par une phase d'adressage d'un module périphérique parmi plusieurs.

**Claims**

1. An interconnecting serial bus for an information processing system including a central processing unit (CPU) and at least one peripheral module, said bus (26), comprising :
frame means (FRAME) for defining a synchronous information exchange interval ;
clock means (CLK), operating during said information exchange interval, for defining a synchronous information clock rate and for providing said peripheral module with a system reference ;
sync means (SYNC) for defining at least one discrete asynchronous information field during said information exchange interval ; and
line means (LINE) for providing serial, bidirectional information exchange between said central processing unit (CPU) and said peripheral module at said clock rate, a rack master (27, 34), being coupled to said serial bus (26) remotely from said central processing unit (CPU), for interfacing said peripheral module with said serial bus for information exchange between said peripheral module and said central processing unit, said serial bus being characterized in that said rack master (27,34) comprises interrupt means (77, 106, 107), coupled to said lines means during a time interval outside of said information exchange interval, for reporting extraordinary peripheral module and rack master events to said central processing unit (CPU).

2. Bus according to Claim 1, characterized in that said rack master (27,324) further comprises :
acknowledgement means, coupled to said line means, for producing a signal verifying correct receipt of an information field at said rack master.

3. Bus according to Claim 1, characterized in that said rack master (27, 34) is arranged and operated for interfacing a plurality of peripheral modules to said serial bus.

4. Bus according to Claim 3, characterized in that said rack master further comprises address means, for directing information received via said serial bus from said central processing unit (CPU) to a selected one of said peripheral modules (24,25).

5. Bus according to one of Claims 1 to 4, characterized in that said bus comprises a plurality of rack masters (27,34), each of which is operable to interface at least one associated peripheral module (31,27) to said serial bus.

6. Bus of Claim 5, characterized in that each of said rack masters further comprises rack address means (3,97), responsive to a rack address signal directed to a particular one of said rack masters (27) and received at each of said rack masters (27,34) from said central processing unit (CPU) via said serial bus (26), for selecting operation of said particular rack master (27) in response thereto.

7. Bus of one of Claims 1 to 6, characterized in that said rack master further comprises parity means for detecting (102,103, 104) and reporting (106, 77) parity errors occuring during an information exchange.

8. Bus of one of Claims 1 to 7, characterized in that said bus further comprises means for reporting a CPU failure when an asynchronous information field is present on said bus (SYNC) in the absence of a defined synchronous information exchange interval (FRAME).

9. Bus according to one of Claims 1 to 8, characterized in that said bus further comprises :
watchdog means for monitoring and timing serial, bidirectional information exchanges between said central processing unit and said peirpheral module (31, 32, 37, 38), and for logging a system error when said information exchange is not formatted within a discrete information field.

10. Bus according to one of Claims 1 to 9 characterized in that said information exchange includes a bit transfer protocol comprising :
a nibble/lock transfer bit for identifying large and small information transfers (N/B) ;
a module select bit for selecting a rack associated peripheral module (MS) ;
a rack select bit for selecting a destination rack (RS) ;
a read/write bit for setting a peripheral module read or write mode (R/W) ;
a command/data bit identifying control information and data (C/D) ; and
a parity bit for indicating information transfer parity (PAR).

11. Bus according to Claim 10, characterized in that said bit protocol further comprises a "sync rack available" bit for indicating rack master control of a rack bus (30, 36).

12. Bus according to Claim 11, characterized in that said rack master comprises means (90, 98, 102, 109) for generating a high/low byte to indicate which portion of a multiple exchange information exchange is to be received.

13. Bus according to Claim 12, characterized in that said rack master comprises means for generating an address signal when a compound information exchange is to be made.

14. A process for exchanging information in an information processing system including a central processing unit (CPU) and at least one peripheral module (31), said process consisting of coupling a parallel central processing unit domain (42) with a parallel peripheral module domain (30) via an interconnecting serial bus (26), and comprising the steps of :
defining a synchronous information exchange interval with a frame signal ;
defining a synchronous information clock rate during said information exchange interval and creating a system reference by using a clock signal for a peripheral module ;
defining at least one discrete asynchronous information field during said information exchange interval with a SYNC signal ; and
providing serial, bidirectional information exchange between said central processing unit and said peripheral module at said clock rate with a ligne signal ;
interfacing said peripheral module with said serial bus for information exchange between said peripheral module and said central processing unit with a rack master coupled to said serial bus remotely from said central processing unit, said process being characterized by a step of :
reporting extraodinary peripheral module and rack master events to said central processing unit with an interrupt signal generated during an interval outside of said information exchange interval.

15. Process according to Claim 14, characterized by a step of producing a signal verifying correct receipt of an information field at said rack master with an acknowlegement signal transmitted on the bidirectional line.

16. Process according to Claim 14, characterized by a step of addressing one of a plurality of rack masters.

17. Process according to Claim 14, characterized by a step of addressing one of a plurality of peripheral modules.

**Ansprüche**

1. Serien-Verbindungsbus (26) für Datenverarbeitungssystem, bestehend aus einer zentralen Verarbeitungseinheit (CPU) und mit mindestens einem Peripheriemodul, wobei der Bus besitzt:
. Rastereinrichtungen (TRAME) zur Definierung eines Intervalls des Austausches von synchronen Informationen;
. Zeitgebereinrichtungen (CLK), die während diesem Austauschintervall in Betrieb gesetzt sind, um eine Kadenz von synchronen Informationen zu definieren und das Peripheriemodul mit einem Systembezug zu versehen;
. Einrichtungen (SYNC) zur Definierung mindestens einer diskreten asynchronen Meldung während dieses Austauschintervalls; und
. Linieneinrichtungen (LIGNE) zur Erzeugung eines Zweirichtungs-Serien-Informationsaustausches zwischen der zentralen Verarbeitungseinheit (CPU) und dem Peripheriemodul mit der durch den Zeitgeber bestimmten Geschwindigkeit, wobei ein Schrankkopf (27, 34) mit diesem Serienbus (26) in einem Abstand von der zentralen Verarbeitungseinheit (CPU) gekoppelt ist, um ein Interface zwischen dem Peripheriemodul und dem Bus zum Zweck des Informationsaustausches zwischen dem Modul und der zentralen Verarbeitungseinheit zu bilden, wobei der Serienbus dadurch gekennzeichnet ist, daß der Schrankkopf (27, 34) Unterbrechungseinrichtungen (77, 106, 107) besitzt, die mit den Linieneinrichtungen während eines außerhalb des Informationsaustauschintervalls gelegenen Zeitintervalls gekoppelt sind, um die zentrale Verarbeitungseinheit von Anomalien zu informieren, die in einem Peripheriemodul und in dem Schrankkopf auftreten.

2. Bus nach Anspruch 1, dadurch gekennzeichnet, daß der Schrankkopf (27, 34) Quittierungseinrichtungen besitzt, die mit den Linieneinrichtungen gekoppelt sind, um ein Signal der Kontrolle das guten Empfangs eines Informationsfelds durch den Schrankkopf zu erzeugen.

3. Bus nach Anspruch 1, dadurch gekennzeichnet, daß der Schrankkopf (27,34) ausgebildet und gesteuert ist, um ein Interface zwischen mehreren Peripheriemodulen (31, 32, 37, 38) und dem Serienbus (26) zu bilden.

4. Bus nach Anspruch 3, dadurch gekennzeichnet, daß der Schrankkopf Adressiereinrichtungen besitzt, die die über den Serienbus erhaltene, von der zentralen Verarbeitungseinheit (CPU) kommende Information zu einem ausgewählten Peripheriemodul (24, 25) leiten.

5. Bus nach einem der Ansprüche 1 bis 4, dadurch gekennzeichnet, daß er mehreren Schrankköpfen (27, 34) zugeordnet ist, deren jeder ausgebildet und gesteuert ist, um ein Interface mindestens zwischen einem zugeordneten Peripheriemodul (31, 27) und dem Serienbus zu bilden.

6. Bus nach Anspruch 5, dadurch gekennzeichnet, daß jeder Schrankkopf (27, 34) Schrankadressiereinrichtungen (3, 97) besitzt, die in Antwort auf ein Schrankadreßsignal, das einen der Schrankköpfe (27) markiert und auf jedem der Schrankköpfe (27, 34) von der zentralen Verarbeitungseinheit (CPU) über den Serienbus (26) erhalten wird, die Inbetriebnahme des bestimmten Schrankkopfes (27) auszuwählen.

7. Bus nach einem der Ansprüche 1 bis 6, dadurch gekennzeichnet, daß der Schrankkopf Gleichheitseinrichtungen zur Feststellung (102, 103, 104) und zur Übertragung (106, 77) der Gleichheitsfehler besitzt, die während eines Informationsaustausches auftreten.

8. Bus nach einem der Ansprüche 1 bis 7, dadurch gekennzeichnet, daß er Einrichtungen zum Berichten eines Fehlers der zentralen Verarbeitungseinheit besitzt, wenn ein asynchrones Informationsfeld bei Fehlen eines definierten Austauschintervalls von synchronen Informationen (TRAME) auf dem Bus (SYNC) vorhanden ist.

9. Bus nach einem der Ansprüche 1 bis 8, dadurch gekennzeichnet, daß er Überwachungseinrichtungen (watchdog) zum Steuern und Synchronisieren der Zweirichtungs-Serien-Informationsaustausche zwischen der zentralen Verarbeitungseinheit und dem Peripheriemodul (31, 32, 37, 38) und zum Protokollieren eines Systemfehlers besitzt, wenn der Informationsaustausch nicht in einem diskreten Informationsfeld formatiert ist.

10. Bus nach einem der Ansprüche 1 bis 9, dadurch gekennzeichnet, daß der Informationsaustausch ein Bittransferprotokoll besitzt, bestehend aus:
    . einem Bit/Block-Transferbit zur Identifizierung der kleinen und großen Informationstransfers (N/B);
    . einem Modulwählbit zum Auswählen eines dem Schrank zugeordneten Peripheriemoduls (MS);
    . einem Schrankwählbit zum Auswählen eines Bestimmungsschranks (RS);
    . einem Schreib/Lese-Bit zur Herstellung eines Peripheriemodul-Lese-oder - Schreib-Modus (R/W);
    . einem Steuer/Daten-Bit zur Identifizierung der Steuerinformationen und der Daten (C/D); und
    . einem Gleichheitsbit zum Angeben der Gleichheit des Informationstransfers (PAR).

11. Bus nach Anspruch 10, dadurch gekennzeichnet, daß das Bitprotokoll ferner ein Bit "Schrank verfügbar synchron" besitzt, um die Steuerung eines Schrankbus (30, 36) durch den Schrankkopf (27, 34) anzugeben.

12. Bus nach Anspruch 11, dadurch gekennzeichnet, daß der Schrankkopf Einrichtungen (90, 98; 102, 109) zur Erzeugung eines Schwer/Leicht-Oktetts besitzt, um den Teil eines mehrfachen Informationsaustausches anzugeben, der empfangen wurde.

13. Bus nach Anspruch 12, dadurch gekennzeichnet, daß der Schrankkopf Einrichtungen zum Erzeugen eines Adressiersignals besitzt, wenn ein zusammengesetzter Informationsaustausch stattfindet.

14. Verfahren zum Austausch von Daten in einem Datenverarbeitungssystem mit einer zentralen Verarbeitungseinheit (CPU) und mindestens einem Peripheriemodul (31), wobei das Verfahren darin besteht, daß ein paralleler Bereich der zentralen Verarbeitungseinheit (42) mit einem parallelen Bereich des Peripheriemoduls (30) über einen Serien-Verbindungsbus (26) gekoppelt wird, und das aus folgenden Phasen besteht:
    . Definition eines Datenaustausch-Intervalls synchron mit einem Rastersignal;
    . Definition einer synchronen Datenkadenz während des Austauschintervalls und Schaffung eines Systembezugs für das Peripheriemodul mit Hilfe eines Zeitgebersignals;
    . Definition mindestens eines diskreten asynchronen Datenfelds während des Austauschintervalls mit Hilfe eines Signals (SYNC);
    . Einrichtungs-Serien-Datenaustausch zwischen der zentralen Verarbeitungseinheit und dem Peripheriemodul in der Zeitgeberkadenz mit Hilfe eines Liniensignals,

. Bildung eines Interface zwischen dem Peripheriemodul und dem Serienbus für den Datenaustausch zwischen dem Peripheriemodul und der zentralen Verarbeitungseinheit mit einem Schrankkopf, der mit dem Serienbus in einem Abstand von der zentralen Verarbeitungseinheit gekoppelt ist, gekennzeichnet durch eine Phase, in der der zentralen Verarbeitungseinheit Anomalin gemeldet werden, die an dem Peripheriemodul und/oder dem Schrankkopf auftreten, und zwar mit Hilfe eines Unterbrechungssignals, das während eines außerhalb des Austauschintervalls liegenden Intervalls erzeugt wird.

15. Verfahren nach Anspruch 14, gekennzeichnet durch eine Phase der Erzeugung eines Signale zur Kontrolle des guten Empfangs eines Informationsfelds durch den Schrankkopf mit Hilfe eines auf der Zweirichtungsleitung übertragenen Quittierungssignals.

16. Verfahren nach Anspruch 14, gekennzeichnet durch eine Phase der Adressierung eines Schrankkopfes unter mehreren.

17. Verfahren nach Anspruch 14, gekennzeichnet durch eine Phase der Adressierung eines Peripheriemoduls unter mehreren.

FIG.1

FIG.2

EP 0 159 941 B1

EP 0 159 941 B1

Bx 7 6 5 4 3 2 1 0 P 3 2 1 0 P          3 2 1 0 P          Bx 7 6

CLK

LIGNE    ADRESSE (SORTIE, $\overline{B}x$) ✕ DONNEES H       ACK  DONNEES L       ACK  ADRESSE

SYNC                                                    SYNC              SYNC

TRAME

**FIG.3a**

Bx 7 6 5 4 3 2 1 0 P                                Bx 7 6 ---

CLK

LIGNE    ADRESSE (SORTIE, $\overline{B}x$) ✕ DONNEES H          ACK  ADRESSE

SYNC                                          SYNC

TRAME

**FIG.3b**

7 6 5 4 3 2 1 0 P ---

CLK

LIGNE    ADRESSE (SORTIE, $\overline{B}x$) ✕ DONNEES H       ACK  DONNEES L

SYNC                                       SYNC

TRAME

**FIG.3c**

FIG_4a

FIG_4b

FIG_4c

EP 0 159 941 B1

FIG_5

FIG_6

FIG_7

EP 0 159 941 B1